# FASCICULE DE BREVET EUROPEEN

(11) **EP 1 045 189 B1**
(45) Date de publication et mention de la délivrance du brevet: **24.09.2003**
(21) Numéro de dépôt: 99810307.1
(22) Date de dépôt: 13.04.1999
(51) Int. Cl.: F16L 55/165, F16L 1/028, H02G 1/08, G02B 6/44

(54) **Procédé de pose d'un tube dans une canalisation et dispositif de mise en pression d'un tube en cours de pose**
Röhreninstallationsverfahren in eine Kanlisation und Vorrichtung zum unter Druck Setzen der Röhre während des Installationsvefahrens
Laying process of a tube in a duct and device for pressurising of a tube during the installation process

(43) Date de publication de la demande: 18.10.2000
(73) Titulaire: PLUMETTAZ SA, 1880 Bex (CH)
(72) Inventeur: Plumettaz, Gérard, 1880 BEX (CH)
(74) Mandataire: WILLIAM BLANC & CIE

(56) Documents cités:
- EP-A- 0 445 858
- EP-A- 0 785 387

## Description

La présente invention concerne un procédé de pose d'un tube creux dans une canalisation et dispositif de mise en pression d'un tube en creux en cours de pose.

Dans de nombreuses canalisations souterraines déjà installées, métalliques ou en matériau synthétique, il peut être nécessaire de tirer un ou plusieurs tubes, généralement en matériau synthétique, ayant évidemment des diamètres plus faibles que celui de la canalisation déjà installée. Ces tubes sont destinés à de multiples usages, comme par exemple recevoir ultérieurement un câble optique.

Divers procédés ont été développés pour tirer un tel tube dans une canalisation déjà installée, laquelle peut déjà contenir un ou plusieurs autres éléments, comme des câble ou d'autres tubes. Le document EP-A-0445858 montre un desdits procédés.

L'ouvrage intitulé « Installation of Optical Cables in Ducts » de W.Griffioen, édité chez CIP-Gegevens Koninklijke Bibliotheek, Den Haag, ISBN 90 72125 37 1 décrit en détail notamment une pose par soufflage ou blowing.

On sait par ailleurs que lorsqu'un tube est soumis à une différence de pression entre la pression qui l'entoure et celle régnant à l'intérieur du tube, ce tube résiste mieux mécaniquement lorsque la pression à l'intérieur du tube est supérieure à celle qui l'entoure. En d'autres termes, un tube apte à résister à une surpression interne déterminée est susceptible de se détériorer lorsque cette même valeur de surpression est appliquée de l'extérieur du tube vers l'intérieur.

Vu que dans le procédé de pose mentionné précédemment on se trouve dans la situation où la pression externe du tube est supérieure à sa pression interne, on peut avoir des risques de déformation etlou de rupture du tube selon la pression utilisée à l'entrée du système et selon la longueur de pose.

Un premier but de l'invention est donc de proposer un procédé de pose permettant d'éviter ce genre d'inconvénients.

Un deuxième but de l'invention est de proposer un dispositif permettant d'éviter ce genre d'inconvénients lors d'une pose d'un tube dans une canalisation.

Le premier but est obtenu par un procédé tel que décrit dans la revendication 1, alors que le deuxième but est obtenu par un dispositif tel que décrit dans la revendication 6. Les revendications dépendantes concernent des formes d'exécution particulières ou variantes du procédé ou du dispositif selon l'invention.

Deux formes d'exécution particulières d'un procédé et des dispositifs correspondants selon l'invention sont décrits ci-dessous, cette description étant à considérer en regard du dessin annexé comportant les figures où :
la figure 1, qui est reprise de la figure 6.1 de l'ouvrage cité, permet de comprendre le fonctionnement du procédé de pose par soufflage.
la figure 2 montre la variation de la pression p à l'intérieur de la conduite déjà posée, cette figure étant partiellement reprise de la figure 5.2 de l'ouvrage cité,
La figure 3 est semblable à la précédente mais montre l'amélioration apportée par le procédé selon l'invention, et
la figure 4 montre schématiquement une forme d'exécution préférentielle d'un dispositif de mise en pression du tube à tirer.

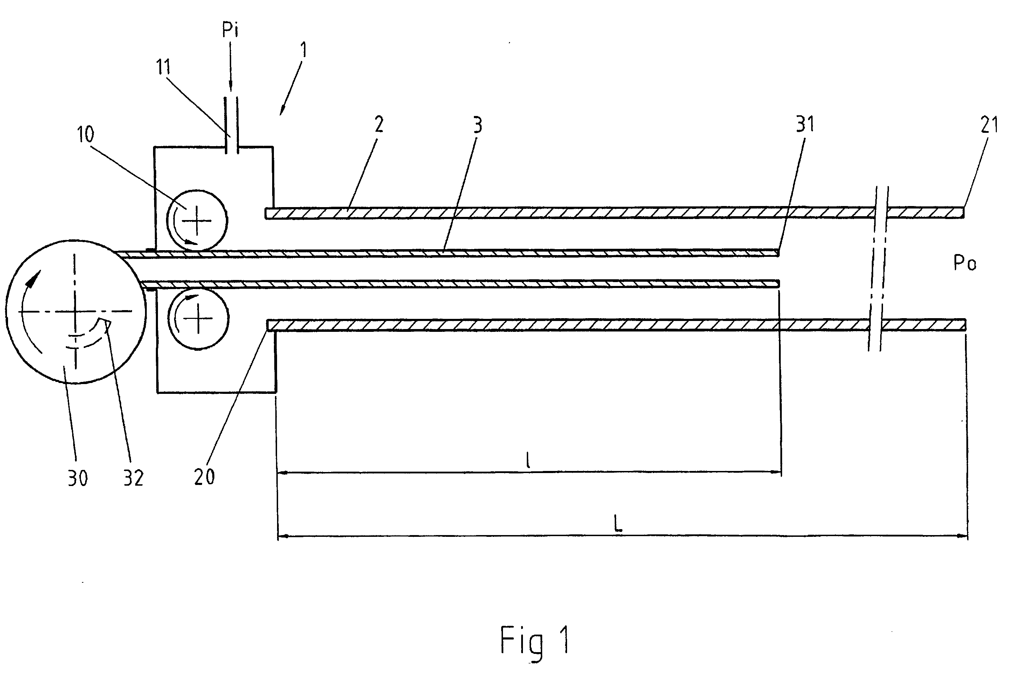

Sur la figure 1 on a un dispositif de soufflage/poussée 1, disposé à une extrémité 20 d'une conduite souterraine installée 2 de longueur L. L'extrémité opposée 21 de la conduite souterraine 2 est ouverte à la pression atmosphérique P₀. Un tube 3, déroulé à partir d'une bobine 30, est en cours de pose dans la conduite 2, son extrémité 31 étant à une distance I relativement à l'entrée 20 de la canalisation 2, son autre extrémité 32 étant encore sur la bobine 30. Le dispositif de soufflage/poussée 1 comprend notamment des moyens de poussée mécanique 10, par exemple une paire de roues d'entraînement comme représenté sur la figure, ainsi que des moyens de soufflage 11, constitués par exemple d'une alimentation d'air sous pression comme représenté. Le dispositif de soufflage/poussée 1 est relié de manière étanche à la canalisation 2 et l'entrée du tube 3 dans ledit dispositif est aussi traitée de manière étanche, de telle manière que la pression d'air P; introduite dans le dispositif se reporte avec le moins de pertes possibles dans la canalisation 2. Cette pression Pᵢ, de l'ordre de 10 à 15 bars, permet un flottement du tube 3 dans la canalisation 2 ainsi que sa poussée le long de ladite canalisation, les moyens de poussée mécanique 10 aidant à cette poussée, comme expliqué dans l'ouvrage cité.

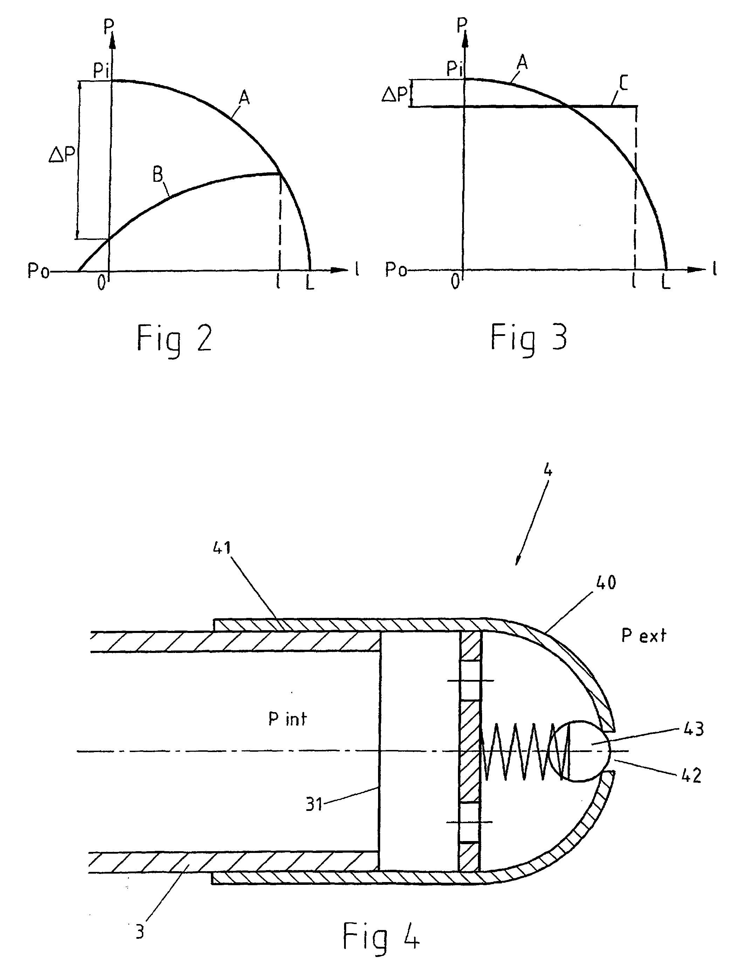

La représentation de la pression p le long de la canalisation 2 est représentée par la courbe A à la figure 2. Il est démontré dans l'ouvrage cité que l'allure de cette courbe est parabolique, passant pour I=0 de la valeur Pᵢ de la pression introduite dans le système par le dispositif de soufflage/poussée 1, à la valeur de la pression atmosphérique P₀ pour I= L, l'extrémité 21 de la canalisation 2 étant à l'air libre.

En se reportant à la figure 1, on voit que pour les procédés de pose connus, l'extrémité 31 du tube 3 en train d'être posé est ouverte, c'est-à-dire que la pression p qui règne à l'extrémité de ce tube 3 correspond à la pression p en cet endroit de la canalisation 2, cette pression étant généralement supérieure à P₀. Vu que l'extrémité opposée 32 du tube 3 est aussi ouverte, on a un flux d'air à l'intérieur du tube 3, allant depuis l'extrémité 31 vers l'extrémité 32. La représentation graphique de la variation de pression à l'intérieur du tube 3 est donnée par la courbe B de la figure 2, en admettant ici que la longueur du tube 3 correspond à la longueur L de la canalisation 2.

On voit qu'à proximité de l'extrémité 20 de la canalisation 2 par laquelle le tube 3 est introduit, on a une différence de pression ΔP entre l'extérieur et l'intérieur du tube 3, la valeur ΔP correspondant à la différence entre la courbe A et la courbe B, respectivement entre Pᵢ et la valeur de la courbe B pour I= 0.

Lorsque l'extrémité 31 du tube 3 est proche de l'extrémité 21, la valeur ΔP augmente fortement et peut facilement dépasser une valeur maximum de résistance à la pression externe du tube 3. Lors d'une pose d'un tube 3 comme décrit ci-dessus, on a donc souvent une implosion, une déchirure ou une déformation irréversible du tube 3 à proximité de l'extrémité d'entrée 20 de la canalisation 2.

Des essais tendant à simplement boucher l'une ou l'autre ou les deux extrémités 31, 32 du tube 3 ne permettent pas de résoudre le problème vu que l'on aurait toujours un endroit du tube 3 avec une valeur ΔP supérieure à la valeur admise.

Selon une première variante du procédé, avant que le tube 3 ne soit déroulé, on bouche de manière étanche par un moyen connu, bouchon, scellage ou autre, les deux extrémités 31 et 32 du tube, l'une desdites extrémités étant munie d'une valve d'admission d'air. On met ensuite le tube 3 sous pression d'air, à l'aide du compresseur apte à fournir la pression Pᵢ au dispositif de soufflage/poussée 1 mentionné plus haut. Le tube 3 est donc gonflé à une pression Pₛ, inférieure ou égale à Pᵢ, cette pression restant constante sur toute la longueur du tube 3 et durant toute la pose de celui-ci, comme représenté par la courbe C à la figure 3. La valeur ΔP représentant la surpression s'exerçant depuis l'extérieur vers l'intérieur du tube 3 peut être rendue aussi faible que désirée en rapprochant Pₛ de Pᵢ, c'est-à-dire en en gonflant préalablement le tube 3 à une pression très proche ou égale à Pᵢ, afin que la valeur ΔP soit toujours inférieure à la valeur de la surpression externe que le tube 3 peut supporter. De cette manière, on a en fait transformé une surpression s'exerçant depuis l'extérieur vers l'intérieur, surpression que le tube ne peut supporter, en une surpression s'exerçant depuis l'intérieur vers l'extérieur, surpression que le tube peut supporter.

La figure 4 montre de manière schématique un dispositif de soupape 4 permettant d'opérer selon une variante préférentielle du procédé précédent, n'utilisant pas de moyens auxiliaires de gonflage du tube 3 comme le compresseur mentionné précédemment. Un embout 40, en matériau synthétique ou métallique est fixé de manière étanche, par exemple par collage, sertissage, soudure ou tout autre moyen 41 sur l'extrémité 31 du tube 3. Un orifice 42, contrôlé par une soupape 43 représentée ici sous la forme d'une bille poussée par un ressort, peut mettre en communication l'intérieur de l'embout 40, respectivement l'extrémité 31 du tube 3 avec l'atmosphère ambiante lorsque la pression Pₑₓₜ de l'atmosphère ambiante est supérieure à la pression Pᵢₙₜ à l'extrémité 31, c'est-à-dire que la soupape 43 est conçue pour ouvrir l'orifice 42 lorsque la pression extérieure Pₑₓₜ est supérieure à Pᵢₙₜ et pour fermer ledit orifice lorsque Pₑₓₜ est inférieure à Pᵢₙₜ.

Simultanément, comme précédemment, l'autre extrémité 32 du tube 3 est bouchée.

Ainsi, avant de commencer la pose du tube 3 dans la canalisation 2, la pression interne dans le tube 3 vaut généralement la pression atmosphérique P₀. Lorsqu'on introduit l'extrémité 31 du tube 3, munie du dispositif de soupape 4, l'extrémité 32 sur la bobine 30 étant bouchée, dans le dispositif de soufflage/poussée 1, dans lequel la pression s'établit à la valeur Pᵢ, la soupape 43 est automatiquement actionnée faisant que le tube 3 se remplit d'air jusqu'à ce que sa pression interne s'établisse à la valeur Pᵢ. En fait, et si le tube 3 ne stationne pas dans le dispositif 1 ou au début de la canalisation 2, la pression qui s'établit à l'intérieur du tube 3 est légèrement inférieure à Pᵢ, vu que l'extrémité 31 a avancé dans la canalisation 2 et que l'équilibre des pressions s'établit pour une valeur de plus grande que 0, respectivement pour une valeur p légèrement plus faible que Pᵢ, comme par exemple Pₛ sur la figure 3. Vu que sur la suite du trajet de l'extrémité 31 dans la canalisation 2 la valeur de la pression Pᵢₙₜ à l'intérieur du tube 3 est toujours supérieure à Pₑₓₜ, l'orifice 42 restera fermé.

Durant toute la pose du tube 3 dans la canalisation 2 la pression interne Pᵢₙₜ dans le tube 3 restera donc constante étant égale ou légèrement inférieure à Pᵢ, comme représenté aussi par la courbe C de la figure 3. Ainsi on n'aura plus la situation dans laquelle la pression Pₑₓₜ serait supérieure à Pᵢₙₜ, pouvant amener à la détérioration du tube 3.

Selon les deux variantes décrites du procédé, lorsque le tube 3 est entièrement posé dans la canalisation 2, il suffit de purger le tube 3 en le vidant de l'air à haute pression qu'il contient, soit en agissant mécaniquement sur la soupape 43, soit en ouvrant une vanne non représentée, soit en retirant l'embout 40 ou le bouchon disposé à l'autre extrémité. Lorsque le bouchon et l'embout ont été retirés, on bénéficie d'un tube vide 3 par exemple pour le tirage d'un nouveau câble dans la canalisation 2, par exemple un câble optique.

Les moyens mis en oeuvre ici pour garantir l'intégrité du tube 3 lors de sa pose sont extrêmement simples et peu onéreux, ils ne nécessitent en particulier aucune adaptation du dispositif de soufflage/poussée 1 ni aucun matériel de pose supplémentaire à l'exception d'un dispositif à soupape 4.

Ce dispositif à soupape 4 peut être de construction très simple ; comme déjà mentionné l'embout 40 peut s'adapter de manière étanche de multiples façons sur l'extrémité 31 du tube 3. Dans les cas où le mode de fixation est permanent, soudure ou collage, ou entraîne un déformation de l'embout, lors d'un sertissage par exemple, le dispositif 4 ne sera employé qu'une seule fois. A contrario, si le moyen de fixation du dispositif 4 sur l'extrémité 31 est démontable, le dispositif pourra être utilisé pour de multiples poses. La figure 4 montre un type particulier de soupape 43 monté à demeure sur l'embout 40. De manière avantageuse, on utilisera une soupape de type connu, par exemple une valve de chambre à air ou de roue de véhicule, montée de manière permanente ou démontable sur l'embout 40.

Un tel procédé, selon l'une ou l'autre des variantes décrites, assure une pression Pₛ constante sur toute la longueur du tube 3 et durant toute la pose. On est donc ainsi indépendant de la vitesse de tirage ainsi que d'éventuels arrêts durant la pose.

## Revendications

1. Procédé de pose d'un tube creux (3) dans une canalisation (2), utilisant une injection d'un fluide à une première pression (Pᵢ) sur une première extrémité (20) de la canalisation, l'autre extrémité (21) de la canalisation étant à une deuxième pression (P₀) inférieure à ladite première pression,
**caractérisé en ce que**
la pression (Pₛ) à l'intérieur du tube (3) est constante, la différence de pression (ΔP) entre la dite première pression (Pᵢ) et la pression (Pₛ) à l'intérieur du tube (3) étant inférieure à la surpression que peut supporter le tube (3).

2. Procédé selon la revendication 1, **caractérisé en ce que** la pression (Pₛ) à l'intérieur du tube (3) est obtenue par mise en pression du tube à l'aide des moyens d'injection d'un fluide à une première pression (Pᵢ).

3. Procédé selon la revendication 1, **caractérisé en ce que** la pression (Pₛ, Pᵢₙₜ) à l'intérieur du tube (3) est obtenu par une soupape (43) montée sur l'extrémité (31) du tube (3) introduite en premier dans la canalisation (2), ladite soupape ne s'ouvrant que lorsque la pression (Pₑₓₜ) à l'extérieur de ladite extrémité (31) est supérieure à la pression (Pᵢₙₜ) à l'intérieur du tube (3).

4. Procédé selon l'une des revendications 1 ou 3, **caractérisé en ce que** la soupape (43) ne s'ouvre que lorsque l'extrémité (31) du tube muni de ladite soupape est proche de la première extrémité (20) de la canalisation.

5. Procédé selon l'une des revendications précédentes, **caractérisé en ce que** l'autre extrémité (32) du tube est bouchée.

6. Dispositif de mise en pression d'un tube creux (3), **caractérisé en ce qu'**il comprend un embout (40) muni d'une soupape (43), ledit embout (40) étant fixé de manière étanche sur une extrémité (31) dudit tube creux (3), ladite soupape (43) ne s'ouvrant que lorsque la pression (Pₑₓₜ) à l'extérieur de ladite extrémité (31) est supérieure à la pression (Pᵢₙₜ) à l'intérieur du tube creux (3).

7. Dispositif selon la revendication 6, **caractérisé en ce que** la soupape (43) est apte à être démontée dudit embout (40).

8. Dispositif selon l'une des revendications 6 ou 7, **caractérisée en ce que** la soupape (43) est constituée par une valve de pneumatique.

9. Dispositif selon l'une des revendications 6 à 8, **caractérisé en ce qu'**il est prévu pour un usage unique.

## Patentansprüche

1. Verfahren für die Verlegung eines hohlen Rohres (3) in einer Rohrleitung (2), durch Beaufschlagung eines ersten Endes (20) der Rohrleitung mit einem Medium unter einem ersten Druck (Pᵢ), wobei das andere Ende (21) der Rohrleitung unter einem zweiten Druck (P₀) steht, der geringer ist als der besagte erste Druck, **dadurch gekennzeichnet, dass** der Druck (Pₛ) innerhalb des Rohres (3) konstant ist, wobei die Druckdifferenz (ΔP) zwischen dem besagten ersten Druck (Pᵢ) und dem Druck (Pₛ) innerhalb des Rohres (3) kleiner ist als der Überdruck, dem das Rohr (3) standhalten kann.

2. Verfahren nach Anspruch 1, **dadurch gekennzeichnet, dass** der Druck (Pₛ) innerhalb des Rohres (3) aufgebaut wird durch die Unterdrucksetzung des Rohres anhand von Mitteln zur Beaufschlagung mit einem Medium unter einem ersten Druck (Pᵢ).

3. Verfahren nach Anspruch 1, **dadurch gekennzeichnet, dass** der Druck (Pₛ, Pᵢₙₜ) innerhalb des Rohres (3) aufgebaut wird über ein Ventil (43), das am Ende (31) des Rohres (3) montiert ist, das als erstes in die Rohrleitung (2) eingeführt wird, wobei sich das besagte Ventil erst dann öffnet, wenn der Druck (Pₑₓₜ) außerhalb des besagten Endes (31) größer ist als der Druck (Pᵢₙₜ) innerhalb des Rohres (3).

4. Verfahren nach einem der Ansprüche 1 oder 3, **dadurch gekennzeichnet, dass** sich das Ventil (43) erst dann öffnet, wenn sich das mit dem besagten Ventil ausgestattete Ende (31) des Rohres in der Nähe des ersten Endes (20) der Rohrleitung befindet.

5. Verfahren nach einem der vorangehenden Ansprüche, **dadurch gekennzeichnet, dass** das andere Ende (32) des Rohres verschlossen ist.

6. Vorrichtung zur Unterdrucksetzüng eines hohlen Rohres (3), **dadurch gekennzeichnet, dass** sie ein mit einem Ventil (43) ausgestattetes Ansatzstück (40) umfasst, wobei das besagte Ansatzstück (40) dicht auf einem Ende (31) des besagten hohlen Rohres (3) befestigt ist, wobei sich das besagte Ventil (43) erst dann öffnet, wenn der Druck (Pₑₓₜ) außerhalb des besagten Endes (31) größer ist als der Druck (Pᵢₙₜ) innerhalb des hohlen Rohres (3).

7. Vorrichtung nach Anspruch 6, **dadurch gekennzeichnet, dass** das Ventil (43) von dem besagten Ansatzstück (40) demontiert werden kann.

8. Vorrichtung nach einem der Ansprüche 6 oder 7, **dadurch gekennzeichnet, dass** das Ventil (43) aus einem Reifenventil besteht.

9. Vorrichtung nach einem der Ansprüche 6 bis 8, **dadurch gekennzeichnet, dass** sie für einen Einmalgebrauch vorgesehen ist.

## Claims

1. A method of installing a hollow tube (3) in a duct (2), using an injection of a fluid at a first pressure (Pᵢ) at a first end (20) of the duct, the other end (21) of the duct being at a second pressure (P₀) less than the said first pressure,
**characterised in that**
the pressure (P_{S}) inside the tube (3) is constant, the difference in pressure (ΔP) between the said first pressure (Pᵢ) and the pressure (P_{S}) inside the tube (3) being less than the overpressure which the tube (3) can withstand.

2. A method according to Claim 1, **characterised in that** the pressure (P_{S}) inside the tube (3) is obtained by pressurising the tube using means of injecting a fluid at a first pressure (Pᵢ).

3. A method according to Claim 1, **characterised in that** the pressure (P_{S}, Pᵢₙₜ) inside the tube (3) is obtained by means of a valve (43) mounted on the end (31) of the tube (3) introduced first into the duct (2), the said valve opening only when the pressure (Pₑₓₜ) outside the said end (31) is greater than the pressure (Pᵢₙₜ) inside the tube (3).

4. A method according to one of Claims 1 or 3, **characterised in that** the valve (43) opens only when the end (31) of the tube provided with the said valve is close to the first end (20) of the duct.

5. A method according to one of the preceding claims, **characterised in that** the other end (32) of the tube is plugged.

6. A device for pressurising a hollow tube (3), **characterised in that** it comprises an end piece (40) provided with a valve (43), the said end piece (40) being sealingly fixed to one end (31) of the said hollow tube (3), the said valve (43) opening only when the pressure (Pₑₓₜ) outside the said end (31) is greater than the pressure (Pᵢₙₜ) inside the hollow tube (3).

7. A device according to Claim 6, **characterised in that** the valve (43) is able to be removed from the said end piece (40).

8. A device according to one of Claims 6 or 7, **characterised in that** the valve (43) consists of a pneumatic valve.

9. A device according to one of Claims 6 to 8, **characterised in that** it is designed for single usage.
